# EUROPÄISCHE PATENTSCHRIFT

(11) **EP 0 831 574 B1**
(45) Veröffentlichungstag und Bekanntmachung des Hinweises auf die Patenterteilung: **27.12.2000**
(21) Anmeldenummer: 97890157.7
(22) Anmeldetag: 08.08.1997
(51) Int. Cl.: H02K 11/00

(54) **Elektromotor mit einem Halteteil für Kondensatoren**
Electric motor with a fixing bracket for condensators
Moteur électrique avec une pièce de fixation pour condensateurs

(30) Priorität: 23.09.1996 AT 55496
(43) Veröffentlichungstag der Anmeldung: 25.03.1998
(73) Patentinhaber: ATB Austria Antriebstechnik Aktiengesellschaft, 8724 Spielberg (Steiermark) (AT)
(72) Erfinder: Mlinar, Daniel, Ing., 8862 St. Ruprecht Nr. 2/4 (AT)
(74) Vertreter: Beer, Manfred, Dipl.-Ing.

(56) Entgegenhaltungen:
- AT-B- 397 013
- AT-B- 398 502
- DE-U- 6 945 550
- US-A- 2 683 824
- US-A- 4 734 602

## Beschreibung

Die Erfindung betrifft einen Elektromotor mit einem Halteteil für das Befestigen eines Kondensators an dem Elektromotor mit den Merkmalen des einleitenden Teils von Anspruch 1.

Halteteile für das Befestigen von Kondensatoren an Elektromotoren sind bekannt. Beispielsweise kann auf die AT 397 013 B und die AT 398 502 B verwiesen werden.

Aus der US 4 734 602 A ist ein Halteteil für das Befestigen eines Kondensators an einem Elektromotor bekannt, der die Merkmale des einleitenden Teils von Anspruch 1 aufweist.

Der Erfindung liegt die Aufgabe zugrunde, einen Elektromotor mit einem Halteteil anzugeben, der einfach aufgebaut ist und der dennoch ein sicheres Befestigen von Kondensatoren am Elektromotor erlaubt.

Erfindungsgemäß wird diese Aufgabe mit einem Elektromotor mit einem Halteteil gelöst, der durch die Merkmale des Anspruches 1 gekennzeichnet ist.

Dadurch, daß der Halteteil über die an seiner Grundplatte vorgesehenen Füße beispielsweise an einer Zugschraube, also einem langgestreckten Bauteil, der die beiden Lagerschilde des Elektromotors miteinander verbindet und gegen das Statorpaket drückt, befestigt werden kann, ergibt sich eine räumlich günstige Anordnung. Weiters sind keine Änderungen am Motor selbst erforderlich, da die die Lagerschilde verbindenden, langgestreckten Bauteile, wie Zugschrauben oder Kerbstifte, bei jedem Elektromotor mit zwei Lagerschilden vorgesehen sind.

Da der dem Motor zugekehrte Rand der Füße in der Gebrauchslage des Halteteils am Statorpaket anliegt, wird ein Kippen des Halteteils gegenüber dem Motor vermieden, weil die Füße am Statorpaket über einen großen Bereich anliegen und den Halteteil besser stützen. Dadurch, daß der dem Statorpaket zugekehrte Rand der Füße entsprechend der Außenkontur des Statorpaketes geformt ist, ergibt sich ein besonders sicherer Sitz.

Ein besonders einfaches Befestigen des erfindungsgemäßen Halteteils ergibt sich, weil die Füße nach Art einer Schnappverbindung an dem langgestreckten Bauteil festlegbar sind.

Dabei kann vorgesehen sein, daß die von der Grundplatte abstehenden Füße je eine Ausnehmung aufweisen, deren Durchmesser dem Durchmesser des langgestreckten Bauteils im wesentlichen entspricht und daß die Ausnehmung zu dem dem Motor zugekehrten Rand der Füße hin offen ist, wobei der diesem Rand benachbarte Bereich der Ausnehmung eine geringere Weite aufweist als der Durchmesser des Bauteils. So wird die Schnappverbindung auf besonders einfache Art und Weise erreicht.

In einer Ausführungsform der Erfindung kann vorgesehen sein, daß der Rand der Ausnehmung in den Füßen, z.B. durch Spitzen oder Zacken, elastisch nachgiebig ist. Bei einem an einer Zugschraube befestigten Halteteil werden die vorstehenden Spitzen mehr oder weniger stark elastisch verformt, so daß sich eine Vorspannung ergibt, die einen sicheren Sitz des Halteteils bewirkt. Es ist dabei bevorzugt vorgesehen, daß an den Enden der Füße über den Rand der Füße, der am Statorpaket anliegt, vorstehende Spitzen vorgesehen sind.

Zur Erhöhung der Festigkeit kann vorgesehen sein, daß die Spitzen bei montiertem Halteteil unter Vorspannung an der Außenfläche des Statorpaketes anliegen.

Eine räumlich günstige Anordnung ergibt sich, wenn vorgesehen ist, daß die Haltelasche für den Kondensator mit der Grundplatte einen Winkel einschließt.

Das Montieren des Kondensators an der Haltelasche gestaltet sich besonders einfach, wenn die Öffnung für die Aufnahme der Kondensatorschraube zum freien Rand der Haltelasche hin offen ist. Neben dieser Möglichkeit der Befestigung des Kondensators an der Haltelasche können auch andere Arten von Befestigungen von Kondensatoren, z.B. Schnappverbindungen od. dgl. vorgesehen sein.

Die Stabilität des Halteteils ist verbessert, wenn zwischen der Grundplatte und der Haltelasche wenigstens eine Versteifungsrippe vorgesehen ist.

Um den Halteteil in axialer Richtung des Motors festzuhalten und ein unerwünschtes Verrutschen desselben zu vermeiden, bewährt sich eine Ausführungsform, bei der vorgesehen ist, daß von der Grundplatte zwei, Laschen abstehen und daß die Laschen an einem eine Durchgangsöffnung für eine die Lagerschilde verbindende Spannschraube aufweisenden Teil (Verschraubungslasche) des Lagerschildes aufliegen.

Das Sichern des Halteteils in axialer Richtung wird verbessert, wenn vorgesehen ist, daß der Abstand der Lasche von dem ihr benachbarten Fuß der in Achsrichtung gemessenen Abmessung der Verschraubungslasche entspricht, und daß bei angesetztem Halteteil die Verschraubungslasche zwischen der Lasche und dem ihr benachbarten Fuß des Halteteils aufgenommen ist.

Eine räumlich günstige Anordnung ergibt sich dabei, wenn zwischen den Laschen bei montiertem Halteteil ein Ende des langgestreckten Bauteils, z.B. der Kopf einer Zugschraube, aufgenommen ist.

Weitere Einzelheiten und Merkmale der Erfindung ergeben sich aus der nachstehenden Beschreibung, in welcher auf die angeschlossenen Zeichnungen Bezug genommen ist, in denen ein Elektromotor mit Halteteil gemäß der Erfindung in einem Ausführungsbeispiel dargestellt ist.

Es zeigt:
Fig. 1 teilweise geschnitten einen mit einem Halteteil an einem Elektromotor befestigten Kondensator,
Fig. 2 teilweise im Schnitt den am Elektromotor befestigten Halteteil ohne Kondensator,
Fig. 3 einen über einen Halteteil am Motor befestigten Kondensator von dem bezüglich Fig. 1 anderen Ende des Motors aus gesehen,
Fig. 4 teilweise im Schnitt einen Halteteil,
Fig. 5 den Halteteil aus Fig. 4 in Ansicht in Richtung des Pfeiles 4 in Fig. 4,
Fig. 6 einen Schnitt längs der Linie VI-VI in Fig. 5 und
Fig. 7 eine Ansicht des Halteteils in Richtung des Pfeiles Z in Fig. 4.

Ein Elektromotor 1 besitzt ein Statorpaket 2 mit Statorwicklung 3, einen nicht gezeigten Rotor sowie zwei Lagerschilde 4 und 5. Die Lagerschilde 4 und 5 sind über vier langgestreckte Bauteile 6 im Beispiel vier Zugschrauben, die Verschraubungslaschen 7 der Lagerschilde 4 und 5 durchgreifen, miteinander verbunden und werden gegen die Stirnflächen des Statorpaketes 2 gepreßt.

An Stelle der Zugschrauben können andere langgestreckte Bauteile 6, z.B. Kerbstifte, vorgesehen sein, welche die Lagerschilde 4 und 5 am Statorpaket 2 festlegen.

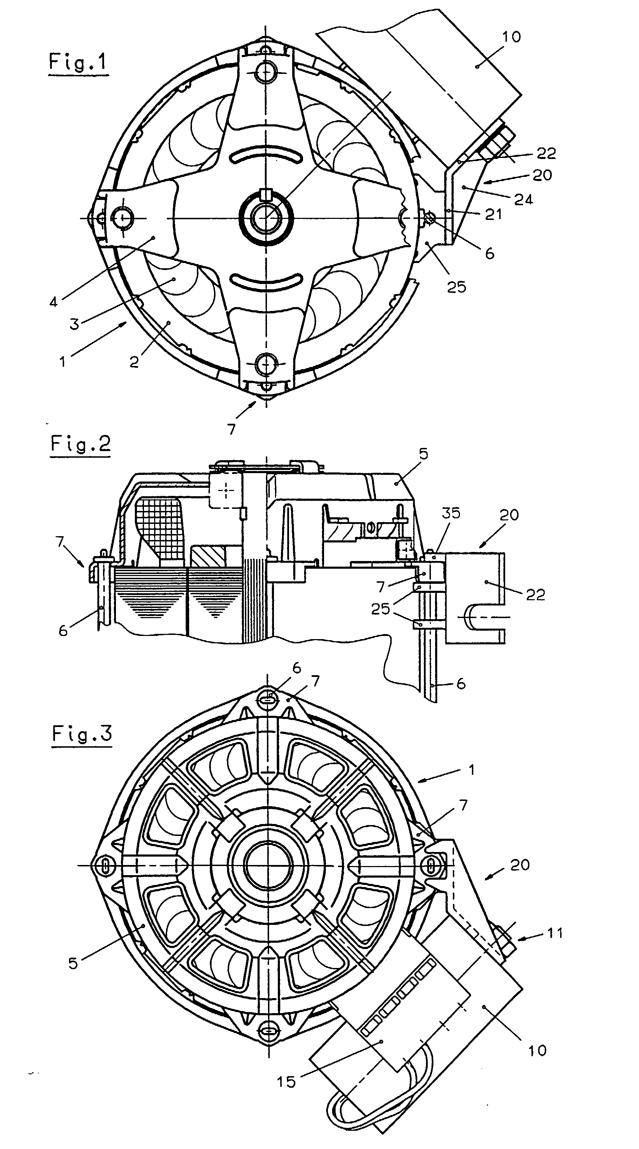

Zum Befestigen eines Kondensators 10 ist ein Halteteil 20 vorgesehen. In Fig. 3 ist gezeigt, daß zur elektrischen Verbindung des Kondensators 10 mit dem Elektromotor 1 ein Steckerteil 15 vorgesehen ist. Der z.B. aus der EP 484 313 A an sich bekannte Steckerteil 15 kann, über eine gabelartige Ausbildung an Wicklungsköpfen der Statorwicklung 3 festgelegt werden.

Im gezeigten Ausführungsbeispiel ist der Kondensator 10 am Halteteil 20 über eine Kondensatorschraube 11 befestigt. Jede andere Art der Verbindung des Kondensators 10 mit dem Halteteil 20, so beispielsweise eine Schnappverbindung od. dgl., ist denkbar.

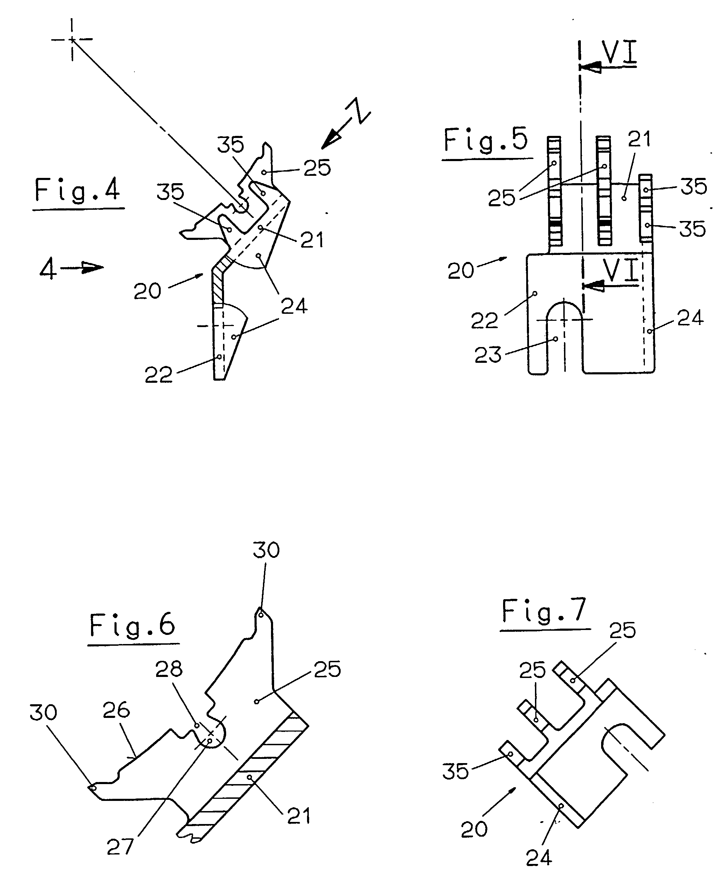

Der in den Fig. 4 bis 7 in Einzelheiten gezeigte Halteteil 20 besteht aus einer Grundplatte 21 und einer Haltelasche 22, an welcher der Kondensator 10 befestigt ist. Hiezu ist in der Haltelasche 22 eine vorzugsweise nach einer Seite hin offene Öffnung 23 vorgesehen, durch die ein Bolzen der Kondensatorschraube 11 gesteckt werden kann. Im gezeigten Ausführungsbeispiel schließt die Haltelasche 22 mit der Grundplatte 21 einen stumpfen Winkel ein. Der Halteteil 20 ist durch eine Versteifungsrippe 24, die sich zwischen der Grundplatte 21 und der Haltelasche 22 erstreckt, versteift.

Von der Grundplatte 21 stehen im gezeigten Ausführungsbeispiel zwei Füße 25 ab, die zueinander parallel ausgerichtet und zur Grundplatte 21 senkrecht stehen. Die Füße 25 sind zur Achse des langgestreckten Bauteils 6, im Beispiel der Zugschraube senkrecht ausgerichtet, wenn der Halteteil 20 am Elektromotor 1 befestigt ist.

Zum Festlegen des Halteteils 20 an einer der Zugschrauben des Elektromotors 1 sind in den Füßen 25 zum Rand 26 der Füße 25 hin offene Ausnehmungen 27 vorgesehen. Das Maul 28 der Ausnehmungen 27, also dessen Breite ist kleiner als der Durchmesser der Ausnehmung 27 und der Zugschraube 6, so daß das Maul 28 ein Befestigen des Halteteils 20 nach Art einer Schnappverbindung zwischen den Füßen 25 und der Zugschraube 6 erlaubt.

Wie insbesondere Fig. 6 zeigt, ist der Rand 26 der Füße 25 entsprechend der Außenkontur (Krümmung der Außenfläche) des Statorpaketes 2 geformt, so daß wie in Fig. 1 gezeigt, die Füße 25 über die ganze Länge ihres Randes 26 am Statorpaket 2 anliegen können. Um eine gewisse Vorspannung zu erreichen, sind an den Enden des Randes 26 der Füße 25 Spitzen 30 vorgesehen. Bei an einer Zugschraube festgelegtem Halteteil 20 (die Zugschraube befindet sich dann in der Ausnehmung 27) sind die Spitzen 30 vorgespannt, so daß sich ein sicherer und nicht wackelnder Sitz des Halteteils 20 am Elektromotor 1 ergibt. Um den Halteteil 20 auch in Richtung der Achse des Elektromotors 1 sicher festzulegen, sind - im Ausführungsbeispiel zwei - weitere Laschen 35 vorgesehen, die von der Grundplatte 21 zu den Füßen 25 parallel abstehen.

Wie insbesondere Fig. 2 zeigt, ist der Abstand zwischen den Laschen 35 und dem ihnen benachbarten Fuß 25 des Halteteiles 20 so bemessen, daß dieser Abstand der in Achsrichtung gemessenen Höhe einer Verschraubungslasche 7 entspricht. Die Verschraubungslasche 7, durch welche die Zugschraube ragt, an welcher der Halteteil 20 über seine Füße 25 aufgeschnappt wird, ist zwischen den Laschen 35 und dem ihnen benachbarten Fuß 25 aufgenommen. Dadurch ist ein Verrutschen des Halteteiles 20 in Achsrichtung zuverlässig verhindert.

Zwischen den beiden Laschen 35 kann ein Kopf der Zugschraube aufgenommen sein. Wenn die Zugschraube über die Verschraubungslasche 7 nicht übersteht, kann anstelle von zwei Laschen 35 eine einzige Lasche vorgesehen sein, um den Halteteil 20 in Achsrichtung festzulegen.

Der erfindungsgemäße Halteteil 20 kann einstückig aus Kunststoff im Spritzgußverfahren hergestellt sein.

Der Innenrand der Ausnehmung 27 in den Füßen 25 kann mit elastisch verformbaren Ausformungen, z.B. Zähnen ausgerüstet sein, so daß ein und dieselbe Abmessung der Ausnehmung 27 für Zugschrauben mit unterschiedlichen Durchmessern geeignet ist. Die elastische Ausbildung des Innenrandes der Ausnehmung 27 - gleicht unterschiedliche Durchmesser aus. So können auch Durchmessertoleranzen in der Zugschraube ausgeglichen werden.

## Patentansprüche

1. Elektromotor (1) mit einem Halteteil (20) für das Befestigen eines Kondensators (10) an dem Elektromotor (1), wobei der Halteteil (20) eine Grundplatte (21) aufweist, die zwei von ihr zum Motor (1) hin abstehende Füße (25) besitzt, wobei die Füße (25) an einem in Richtung der Achse des Motors (1) verlaufenden, langgestreckten Bauteil (6) festlegbar sind, dadurch gekennzeichnet, daß der langgestreckte Bauteil (6) die Lagerschilde (4 und 5) miteinander verbindet und gegen das Stortorpaket drückt, daß die Füße (25) nach Art einer Schnappverbindung an dem Bauteil (6) festlegbar sind, daß der dem Statorpaket (2) des Motors (1) zugekehrte Rand (26) der Füße (25) in der Gebrauchslage des Halteteils (20) am Statorpaket (2) anliegt, daß der dem Statorpaket (2) zugekehrte Rand (26) der Füße (25) entsprechend der Außenkontur des Statorpaketes (2) geformt ist und daß der Halteteil (20) eine Haltelasche (22) zum Befestigen des Kondensators (10) aufweist.

2. Motor nach Anspruch 1, dadurch gekennzeichnet, daß die von der Grundplatte (21) abstehenden Füße (25) je eine Ausnehmung (27) aufweisen, deren Durchmesser dem Durchmesser des langgestreckten Bauteils (6) im wesentlichen entspricht, und daß die Ausnehmung (27) zu dem dem Motor (1) zugekehrten Rand (26) der Füße (25) hin offen ist, wobei der diesem Rand (26) benachbarte Bereich (28) der Ausnehmung (27) eine geringere Weite aufweist als der Durchmesser des langgestreckten Bauteils (6).

3. Motor nach Anspruch 2, dadurch gekennzeichnet, daß der Rand der Ausnehmungen (27) in den Füßen (25) elastisch nachgiebig ist.

4. Motor nach einem der Ansprüche 1 bis 3, dadurch gekennzeichnet, daß an den Enden der Füße (25) über den Rand (26) der Füße (25), der am Statorpaket (2) anliegt, vorstehende Spitzen (30) vorgesehen sind.

5. Motor nach Anspruch 4, dadurch gekennzeichnet, daß die Spitzen (30) unter Vorspannung an der Außenfläche des Statorpaketes (2) anliegen.

6. Motor nach einem der Ansprüche 1 bis 5, dadurch gekennzeichnet, daß die Haltelasche (22) für den Kondensator (10) mit der Grundplatte (21) einen Winkel einschließt.

7. Motor nach einem der Ansprüche 1 bis 6, dadurch gekennzeichnet, daß zwischen der Grundplatte (21) und der Haltelasche (22) wenigstens eine Versteifungsrippe (24) vorgesehen ist.

8. Motor nach einem der Ansprüche 1 bis 7, dadurch gekennzeichnet, daß die Öffnung (23) für die Aufnahme einer Kondensatorschraube (11) zum freien Rand der Haltelasche (22) hin offen ist.

9. Motor nach einem der Ansprüche 1 bis 8, dadurch gekennzeichnet, daß von der Grundplatte (21) wenigstens eine, vorzugsweise zwei, Laschen (35) abstehen und daß die Laschen (35) an einer eine Durchgangsöffnung für eine den langgestreckten Bauteil (6) aufweisenden Verschraubungslasche (7) des Lagerschildes (5) aufliegen.

10. Motor nach Anspruch 9, dadurch gekennzeichnet, daß ein Ende des langgestreckten Bauteils (6) zwischen den Laschen (35) aufgenommen ist.

11. Motor nach Anspruch 9 oder 10, dadurch gekennzeichnet, daß der Abstand der Lasche (35) von dem ihr benachbarten Fuß (25) der in Achsrichtung gemessenen Abmessung der Verschraubungslasche (7) entspricht, und daß die Verschraubungslasche (7) zwischen der Lasche (35) und dem ihr benachbarten Fuß (25) des Halteteils (20) aufgenommen ist.

12. Motor nach einem der Ansprüche 1 bis 11, dadurch gekennzeichnet, daß die zwei von der Grundplatte (21) des Halteteils (20) abstehenden Füße (25) zueinander parallele Füße (25) sind.

13. Motor nach einem der Ansprüche 1 bis 12, dadurch gekennzeichnet, daß der langgestreckte Bauteil (6) eine Zugschraube ist.

14. Motor nach dem Anspruch 2 oder 3, dadurch gekennzeichnet, daß der Rand der Ausnehmung (27) durch Spitzen oder Zacken, elastisch nachgiebig ist.

15. Motor nach einem der Ansprüche 9 bis 14, dadurch gekennzeichnet, von der Grundplatte (21) zwei Laschen (35) abstehen.

16. Motor nach Anspruch 15, dadurch gekennzeichnet, daß der Kopf einer den langgestreckten Bauteil (6) bildenden Zugschraube zwischen den Laschen (35) aufgenommen ist.

## Claims

1. Electric motor (1) with a bracket (20) for fixing a capacitor (10) to the electric motor (1), the bracket (20) comprising a baseplate (21), having two feet (25) projecting therefrom towards the motor (1), which feet (25) can be fixed on an elongated component (6) extending in the direction of the axis of the motor (1), characterized in that the elongated component (6) connects the bearing covers (4 and 5), that the feet (25) can be fixed on the component (6) in the manner of snap connection, that the edge (26) of the feet (25) facing the stator pack (2) of the motor (1) bears on the stator pack (2) in the position of use of the bracket (20), that the edge (26) of the feet (25) facing the stator pack (2) is shaped in correspondence with the outer contour of the stator pack (2) and that the bracket (20) has a retaining tongue (22) for fixing the capacitor (10).

2. A motor according to claim 1, characterized in that the feet (25) projecting from the baseplate (21) each have a recess (27) whose diameter substantially corresponds to the diameter of the elongated component (6), and in that the recess (27) is open towards the edge of the foot (25) facing the motor (1), wherein the region (28) of the recess (27) adjacent this edge (26) has a smaller width than the diameter of the elongated component (6).

3. A motor according to claim 2, characterized in that the edge of the recess (27) in the feet (25) is elastically yielding.

4. A motor according to any of claims 1 to 3, characterized in that points (30) are provided on the ends of the feet (25) projecting beyond the edge (26) of the feet (25) which bears on the stator pack (2).

5. A motor according to claim 4, characterized in that the points (30) bear under stress on the outer surface of the stator pack (2) when the bracket (20) is mounted.

6. A motor according to any of claims 1 to 5, characterized in that the retaining tongue (22) for the capacitor (10) makes an angle with the baseplate (21).

7. A motor according to any of claims 1 to 6, characterized in that at least one stiffening rib (24) is provided between the baseplate (21) and the retaining tongue (22).

8. A motor according to any of claims 1 to 7, characterized in that the opening (23) for receiving of a capacitor screw is open towards the free edge of the retaining tongue (22).

9. A motor according to any of claims 1 to 8, characterized in that at least one and preferably two lugs (35) project from the baseplate (21) and in that the lugs (35) bear on a screw lug (7) of the bearing cover (5) having an opening for the draw-in screw the elongated component (6).

10. A motor according to claim 9, characterized in that one end of the elongated component (6) is received between the lugs (35) with the bracket (20) mounted.

11. A motor according to claim 9 or 10, characterized in that the distance of the lug (35) from the foot (25) adjacent thereto corresponds to the dimension of the screw lug (7) measured in the axial direction, and in that the screw lug (7) is received between the lug (35) and the foot (25) of the bracket (20) adjacent thereto.

12. A motor according to any of claims 1 to 11, characterized in that two feet (25) projecting from the baseplate (21) of the bracket (20) are parallel to one another.

13. A motor according to any of claims 1 to 12, characterized in that the elongated component is a draw-in screw (6).

14. A motor according to claim 2 or 3, characterized in that the edge of the recess (27) can yield elastically by points or serrations.

15. A motor according to any of claims 9 to 14, characterized in that two lugs (35) project from the baseplate (21).

16. A motor according to claim 15, characterized in that the head of a draw-in screw being the elongated component (6) is received between the lugs (35).

## Revendications

1. Moteur électrique (1) avec une pièce d'assemblage (20) pour la fixation d'un condensateur (10) sur le motor électrique (1), la pièce d'assemblage (20) comprenant une plaque de base (21), avec deux pieds (25) partent de ce la vers la moteur (1) les pieds (25) peuvent être fixés (25) à un composant allongé (6) orienté dans la direction de l'axe du moteur (1), caractérisée en ce que le composant alonngé (6) relié mutuellement les flasques (4 et 5) et les presse contre le bloc stator, que les pieds (25) peuvent être fixés suivant une sorte de fixation encliquetable sur le composant (6), que le bord (26) des pieds (25), en face du bloc stator (2) du moteur (1), repose, en état de service de la pièce d'assemblage (20), sur le bloc stator (2), que le bord (26) des pieds (25), en face du bloc stator (2), a une forme correspondant au contour extérieur du bloc stator (2) et que la pièce d'assemblage (20) a une attache d'assemblage (22) pour la fixation du condensateur (10).

2. Moteur suivant la revendication 1, caractérisée en ce que les pieds (25) qui partent de la plaque de base (21) présentent, à chaque fois, un creux (27) dont le diamètre correspond pratiquement au diamètre du composant (6), et en ce que le creux (27) est ouvert vers le bord (26) du pied (25) en face du moteur (1), la zone (28) du creux (27), voisine de ce bord (26), étant moins large que le diamètre du composant allongé (6) .

3. Moteur suivant la revendication 2, caractérisée en ce que le bord du creux (27) dans les pieds (25) est, d'une manière élastique, souple.

4. Moteur suivant une des revendications 1 à 3, caractérisée en ce qu' aux extrémités des pieds (25), en face du bord (26) des pieds (25) qui repose sur le bloc stator (2), sont prévues des pointes (30).

5. Moteur suivant la revendication 4, caractérisée en ce que les pointes (30) reposent sur la surface extérieure du bloc stator (2) avec prétension.

6. Moteur suivant une des revendications 1 à 5, caractérisée en ce que l'attache d'assemblage (22) du condensateur (10) fait un angle avec la plaque de base (21).

7. Moteur suivant une des revendications 1 à 6, caractérisée en ce qu'entre la plaque de base (21) et l'attache d'assemblage (22), est prévue au moins une nervure de renfort (24).

8. Moteur suivant une des revendications 1 à 7, caractérisée en ce que l'ouverture (23), appelée à recevoir une vis (11) du condensateur, est ouverte vers le bord libre de l'attache d'assemblage (22).

9. Moteur suivant une des revendications 1 à 8, caractérisée en ce que, de la plaque de base (21) partent au moins un et, de préférence, deux pattes (35) et en ce que les pattes (35) s'appuient sur un collier de vissage (7) de la flasque (5) avec une ouverture de passage pour le composant allongé (6).

10. Moteur suivant la revendication 9, caractérisée en ce qu'entre les pattes (35) se loge une extrémité du composant allongé (6).

11. Moteur suivant une des revendications 9 ou 10, caractérisée en ce que la distance de la patte (35) au pied (25), qui lui est voisin, correspond à la dimension, dan la direction de l'axe, du collier de vissage (7) et en ce que, pour fixer la pièce d'assemblage (20), le collier de vissage (7) se loge entre le patte (35) et le pied (25), qui lui est voisin, de la pièce d'assemblage (20).

12. Moteur suivant une des revendications 1 à 11, caractérisée en ce que, de la plaque de base (21) de la pièce d'assemblage (20), partent deux pieds (25) qui sont parallèles.

13. Moteur suivant une des revendications 1 à 12, caractérisée en ce que le composant allongé (6) est un vis d'assemblage.

14. Moteur suivant la revendication 2 ou 3, caractérisée en ce que le bord du creux (27) est élastiquement déformable par des pointes ou des dents.

15. Moteur suivant une des revendications 9 à 14, caractérisée en ce que, de la plaque de base (21), partent deux pattes (35).

16. Moteur suivant la revendication 15, caractérisée en ce qu'entre les pattes (35), se loge la tête d'une vis d'assemblage (6) constituante le composant allongé.
